Europäisches Patentamt

European Patent Office

Office européen des brevets

(11) Publication number: **0 066 112**
**B1**

(12) # EUROPEAN PATENT SPECIFICATION

(45) Date of publication of patent specification: **28.08.85**

(51) Int. Cl.⁴: **F 24 J 2/08**

(21) Application number: **82103957.5**

(22) Date of filing: **06.05.82**

(54) **Stationary optical longitudinal refractor.**

(30) Priority: **19.05.81 IT 2181081**

(43) Date of publication of application:
**08.12.82 Bulletin 82/49**

(45) Publication of the grant of the patent:
**28.08.85 Bulletin 85/35**

(84) Designated Contracting States:
**BE CH DE FR LI NL**

(56) References cited:
**EP-A-0 050 237**
**FR-A-2 394 766**
**GB-A- 602 171**
**GB-A- 969 020**
**US-A-2 290 100**
**US-A-4 011 857**
**US-A-4 204 881**
**US-A-4 307 711**

**OPTICAL ENGINEERING, vol. 17, no. 3, 5th
June 1978, Washington E.L. BURGESS et al.: A
novel square fresnel lens design for
illuminating circular solar cells, pages 299-300**

**JENAER RUNDSCHAU, 1966, pages 287-295 C.
HOFMANN: "Kunststoff-FRESNEL-Optik und
ihre Anwendungsmöglichkeiten im
wissenschaftlichen Gerätebau"**

(73) Proprietor: **SOCIETA ITALIANA VETRO - SIV
SpA
I-66054 Vasto (Chieti) (IT)**

(72) Inventor: **Pinelli, Tazio
Via S. Boezio, 6
I-27100 Pavia (IT)**
Inventor: **Sebastiano, Francesco
Via Corsica, 26
I-86039 Termoli Campobasso (IT)**

(74) Representative: **Stockmair, Wilfried, Dr. Ing.
Patentanwälte Dipl.Ing. A. Grünecker Dr.Ing. H.
Kinkeldey et al
Dr.Ing. W. Stockmair Dr.rer.nat. K. Schumann
Dipl.Ing. P.H. Jakob Dr.rer.nat. G. Bezold;
Dipl.Ing. W. Meister Dipl.Ing. H. Hilgers; Dr.Ing.
H. Meyer-Plath
Maximilianstrasse 58 D-8000 München 22 (DE)**

(56) References cited:
**APPLIED OPTICS, vol. 19, no. 9, May 1980,
pages 1439-1453, New York, USA C.J.
SLETTEN et al.: "Wide-angle lenses and image
collapsing sub-reflectors for nontracking solar
collectors"**

Courier Press, Leamington Spa, England.

## Description

The invention relates to a stationary optical longitudinal refractor comprising lower dioptric elements on one side of a plane and upper dioptric elements on the other side of the plane, said lower and upper dioptric elements being made of a transparent material and of such a form as to refract light rays passing through said lower and upper dioptric elements toward said plane.

It is known to use a stationary optical longitudinal refractor of this kind for concentrating solar energy on a suitable collecting surface. Such a refractor is disclosed for example, in FR—A—2 394 766. The first and second dioptric elements of this refractor are made of the same material and have the same shape and consequently, their optical performance is the same. In other words, this known refractor is symmetrically designed. This refractor represents a Fresnel type cylindrical lens and concentrates parallel sun rays in a focal line as long as the sun rays are impinging vertically onto the refractor. If the sun rays are impinging with an angle different from a 90° angle, the focal line moves to a different position. Consequently, problems arise relating to concentrating sun rays in a predetermined area if the angle of incidence of the sun rays varies.

. To overcome these problems, a combination of a refractor and reflectors is used which reflectors reflect the sun rays having passed the refractor towards a concentration region where for example, an absorber is provided. The aforementioned document FR—A—2 394 766 discloses the use of such reflectors.

It is also known to mount a refractor and the absorber disposed in the zone of sun ray concentration onto a so-called sun tracking mechanism to move the refractor such, that the sun rays are impinging vertically onto the refractor during at least the major time of the sun's course. The document US—A—4 307 711 discloses a solar energy collector comprising a sun tracking mechanism. The inconvenience with such mechanisms is that they are expensive and complicated requiring intensive maintenance.

An Article published in APPLIED OPTICS, Volume 19, No. 9, (1980, Pages 1439 to 1453) describes wide-angle lenses and image collapsing sub-reflectors for non-tracking solar collectors. Symmetrical Fresnel type lenses are combined with specifically designed reflectors to improve the efficiency of the system. The reflectors have a segmented profile and are costly to manufacture.

The non-prepublished document EP—A—0 050 237 describes a plate for covering a concentrating solar collector. Two stationary optical longitudinal refractors of the type as described at the beginning are juxtaposed and made of a single piece. In other words, the first and second dioptric elements are identical.

The task to be solved by the invention is to improve a stationary refractor according to the generic portion of claim 1 such, that it has a simple construction and a better performance.

This task is solved by a stationary refractor according to the generic portion of claim 1, which refractor is characterized in that its lower dioptric elements have a higher power of refraction than its upper dioptric elements.

It has been found that although the position and inclination of the refractor according to the invention are kept fixed during the daily path of the sun across the sky, said refractor concentrates the solar energy striking the refractor at least for a period of six hours onto an absorber of considerably smaller dimensions than the exposed surface area of the refractor. A concentration ratio equal to greater than 2 is obtained. The concentration ratio is defined here as the ratio between the width L of the refractor surface exposed to the sun and the corresponding dimension $L_1$ of the surface struck by the solar energy behind the refractor during the period of time considered.

The refractor in accordance with the invention may be considered as being comprised of Fresnel type elements, either standard or of a modified version, said elements being made of any transparent material and asymmetrically arranged with respect to a preselected axis.

A sectional profile along a plane vertical to the longitudinal direction of the refractor does not have an axial symmetry.

The so-designed profile does not have any single focal line since the elements making up the refractor do not have the same focal length along the axis of separation between the two sets of the object elements. Therefore, a high concentration of the sun rays can be accomplished with a refractor according to the invention being stationary.

Advantageous embodiments of the invention are claimed by the sub-claims.

One of these embodiments is characterized in that a central element is provided between said lower and upper dioptric elements and consists of two flat-convex half-lenses of different shapes and different focal lengths, said plane separating said two half-lenses from each other. In other words, the central element is afocal because the half elements have different focal lengths.

It has been found that by exposing said flat refractor to the sun's rays with suitable positioning of the profile with respect to the horizontal plane, transmission of the solar image in the direction of the lens's profile is such that there exists a plane in the half-gap opposite that of the incoming sun's rays, in which the incident solar energy is concentrated over an area considerably smaller than that of the collector profile.

It has also been found that said collecting area is always smaller than that which would be obtained using a conventional type Fresnel refractor of the same overall dimensions.

The lower concentrating power of the elements closer to the horizontal plane at ground level, with respect to that of the elements further away from the same horizontal plane, succeeds in limiting the excursion of the sun's rays of the collecting surface during the day.

When a refractor of symmetrical profile is used, for example a Fresnel type one, it is possible, depending on the refractor design features, to find a plane in which the solar image strikes a surface area smaller than the area exposed to the sun over a considerable period of time. More especially, when the angle formed by the axis of the refracted rays with the horizontal plane is such that the sun's rays strike the exposed surface perpendicularly at midday, then the width of the surface struck by the solar image during its movement is determined in the downwards direction by the rays refracted from the upper elements during the hours at the beginning and end of the time period considered, while the same direction upwards is determined by the same elements through the rays refracted at midday.

The asymetrical profile, to which the herein disclosed invention refers, thanks to the higher dioptric power of the lower elements with respect to that of the upper elements, succeeds, while limiting the excursion of the rays refracted in downwards direction by the upper elements, in increasing the deviation of the rays refracted in the upwards direction by the lower elements. In this way, a considerably higher concentration ratio is obtained on the plane of maximum concentration with respect to that obtained on the plane of maximum concentration of a symmetrical refractor having the same overall dimensions as the asymmetrical refractor with which comparison is made.

For example, it was found when comparing the conventional Fresnel lens with a refractor of the herein disclosed type and of the same overall dimensions, that a concentration ratio of 1.59 is obtained on the plane of maximum concentration in the case of the Fresnel type lens, while for the asymmetrical refractor this concentration ratio was greater than 2.

The asymmetrical refractor can, in accordance with the required exposed surface and the solar image characteristics to be obtained, consist of an arbitrary number of upper and lower dioptric elements.

The profile of the various elements can be of the standard Fresnel type or be of a modified type.

A preferred embodiment of the refractor in accordance with the invention is illustrated in the accompanying drawings which are given as an exemplification of the principles of the invention, with no limitation to be inferred.

More precisely:

—Fig. 1 is a scheme of the asymmetrical lens in accordance with the invention;

— Fig. 2 is a view of the profile in accordance with the invention;

— Fig. 3 shows a detail of the Fresnel profile, either standard or modified;

— Fig. 4 is for the purposes of comparison a view of the profile of a conventional Fresnel type lens made up of various elements;

— Fig. 5 shows the solar images on the plane of maximum concentration from 9.00 hours to 15.00 hours for the Fresnel lens;

— Fig. 6 represents the solar images transmitted by a profile like the one illustrated in Fig. 1 from 9.00 hours to 15.00 hours;

— Fig. 7 is a view of the profile in accordance with the invention, coupled to another identical profile.

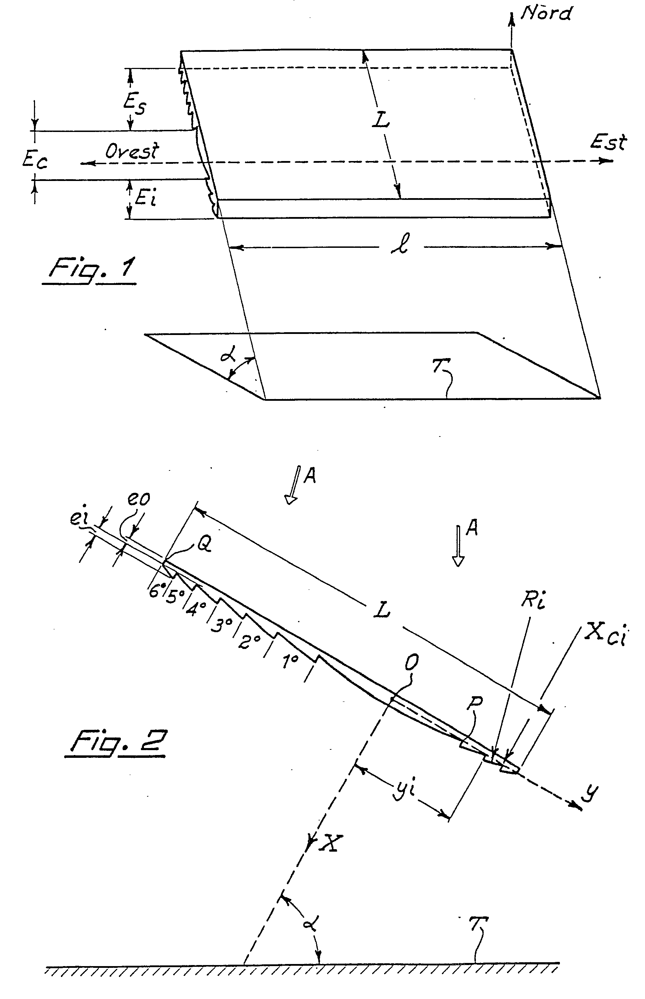

With reference to the figures in the accompanying drawings, and for the sake of simplicity, the behaviour of a profile in accordance with the invention, as illustrated in Fig. 1 was assumed to be taken into consideration.

The angle formed by the plane X of the refracted rays with the horizontal plane T is indicated by the letter $a$, while L designates the width and I the length of refractor R exposed to the sun.

The common thickness of the dioptric elements is indicated by the letters $e_i$, while $e_o$ instead denotes the thickness of the substrate of said elements.

The upper dioptric elements $E_s$ preferably making up the refractor in accordance with the invention are numbered from 1 to 6.

The central dioptric element is indicated by $E_c$ and the lower dioptric elements by $E_i$.

The radius of curvature of a dioptric element is indicated by $R_i$ while $X_{ci}$ and $Y_{ci}$ indicate the co-ordinates of the central curvature of said dioptric element.

The letters $Y_i$ instead denote the distance of axis X from the first lower dioptric element $E_i$ and from the first upper dioptric element $E_s$ respectively.

The luminous rays A strike the plain or unprofiled surface of refractor R.

They are transmitted through the profiles of the various elements of differing inclinations. It was found that during the first and last hours of the time period 9.00 hours to 15.00 hours considered, and above all at exactly 9.00 hours and at exactly 15.00 hours, while the upper dioptric elements $E_s$ limit, with respect to plane X, the excursion of the solar image in the downwards direction, the lower dioptric elements $E_i$, thanks to their greater dioptric power succeed more efficiently in straightening the sun's rays in the upwards direction.

In the example considered, there was just one thickness $e_i$ of the elements, but two distinct focal points were chosen, namely at 800 mm for the upper dioptric elements $E_s$ and at 400 mm for the lower dioptric elements $E_i$.

The focal point of a generic dioptric element, is taken to be the point of intersection of the refracted rays with plane X when the light strikes the exposed surface of the refractor at right angles.

Of course, when the dioptric elements consist of elements of the modified type such point will degenerate into a segment.

It has been found that the plane of maximum concentration lies in a position perpendicular to that of the profile (parallel to the plate) at a distance of 325.72 mm from the origin O of the plane X of separation between the upper elements and the lower elements.

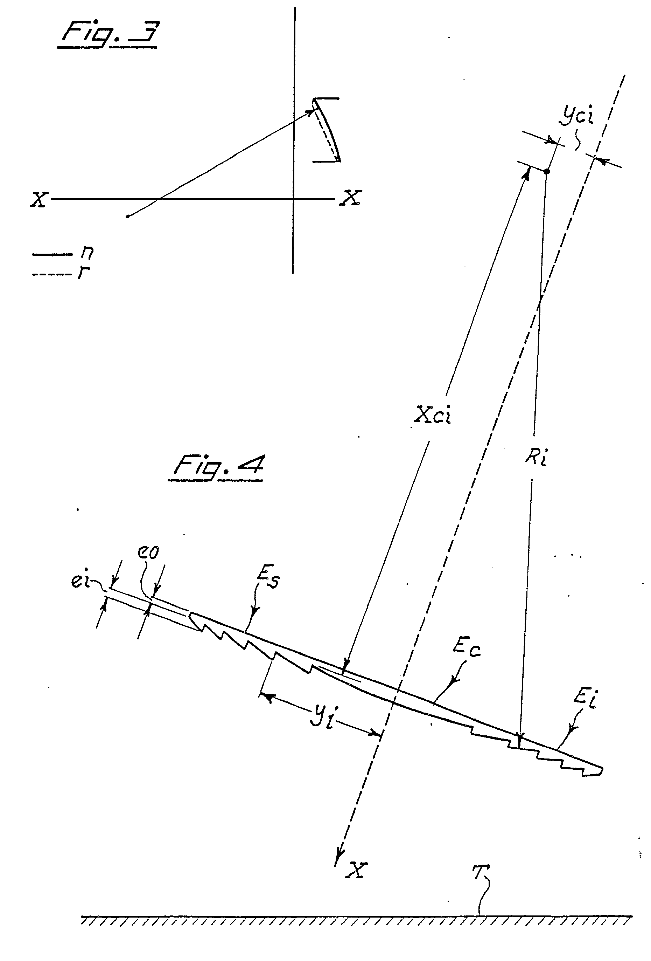

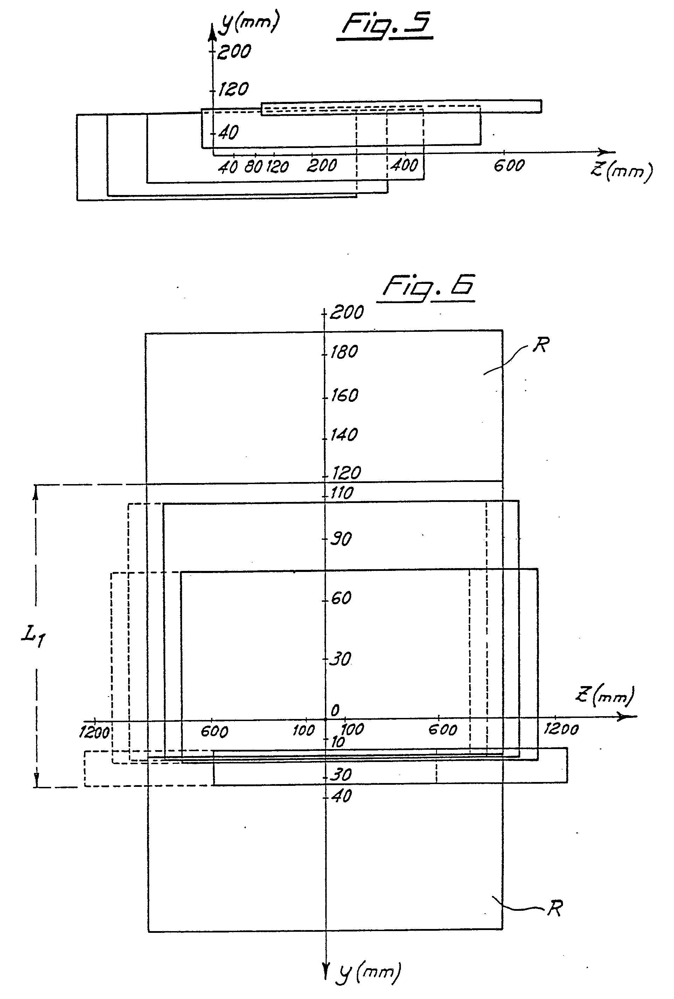

The maximum ordinate towards the top (y negative) (Fig. 6) reached on the collecting plane of the sun's rays is given by the ray refracted by the outermost end Q of the 6th upper element, while the minimum ordinate towards the bottom (y positive) is determined by the outermost end of the central element (denoted by the letter P in Fig. 2).

It is precisely the higher dioptric power of the lower dioptric elements Ei with respect to that of each of the upper dioptric elements Es which gives the asymmetrical refractor the capacity to determine, on a preselected plane, a smaller excursion of the solar image with respect to that obtained with a normal Fresnel lens.

In fact, in our example, the ratio between width L (Fig. 1) of the refractor and dimension $L_1$ (Fig. 6) within which takes place the maximum excursion of the solar image, is between 2 and 2.1.

Suppose we had, instead, a conventional Fresnel lens as illustrated in Fig. 4 with a focal point lying at an intermediate distance between the two focal points of the two sets of dioptric elements (upper and lower) making up the lens as illustrated in Figures 1 and 2, we would also obtain a plane of minimum dispersion of the solar image, but the concentration ratio on said plane would be 1.6 and not at least 2 as in the case of the profile according to the invention.

The orientation of the profile in Fig. 1 is East-West in the longitudinal direction of the lens, while the plane of tilt with respect to the horizontal plane will depend on the latitude of the locality where the lens is to be used.

The refractors in Figures 5 and 6 are considered to be exposed perpendicularly to the sun's rays at 12.00 hours in the day of the summer solstice, at the latitude of 42° North.

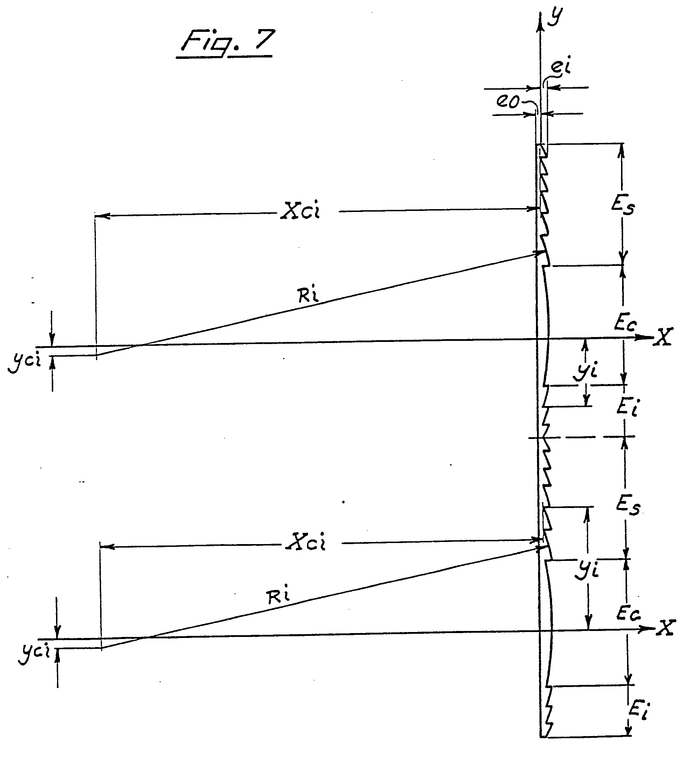

Application of a refractor in accordance with the invention is not bound by the number, as several refractors can be coupled together when deemed necessary (and as shown in Fig. 7 which limits, for the sake of simplicity, the coupling of the refractors according to the invention to a total of two).

To sum up, it should be emphasized that the refractor of asymmetrical profile can be made of any transparent material and can be of any dimensions; furthermore, thanks to its special concentrating power, the refractor possesses certain considerable advantages such as:

— Fixed position both of the refractor and of the absorber.

— Economy in the absorber design thanks to savings in materials and to the simplicity in construction.

— Higher temperatures can be reached for any substance to be irradiated.

## Claims

1. Stationary optical longitudinal refractor (R) comprising lower dioptric elements (Ei) on one side of a plane (X) and upper dioptric elements (Es) on the other side of said plane (X), said lower and upper dioptric elements (Ei, Es) being made of a transparent material and of such a form as to refract light rays passing through said lower and upper dioptric elements (Ei, Es) toward said plane (X), characterised in that said lower dioptric elements (Ei) have a higher power of refraction than said upper dioptric elements (Es).

2. Refractor according to claim 1, characterised in that said plane (X) intersects said refractor (R) in a line spaced from the centre line dividing said refractor (R) into two halves of equal width L/2.

3. Refractor according to claim 1 or 2, characterised in that a central element (Ec) is provided between said lower and upper dioptric elements (Ei, Es) and consists of two flat-convex half-lenses of different shapes and different focal lengths, said plane (X) separating said two half-lenses from each other.

4. Refractor according to any one of claims 1—3, characterised in that said refractor (R) being used for concentrating solar radiation energy and being positioned such that its lower dioptric elements (Ei) are closer to a horizontal plane (T) than its upper dioptric element (Es).

5. Refractor according to any one of claims 1—4, characterised in that said lower and upper dioptric elements (Ei, Es) are of the same thickness (ei).

6. Refractor according to any one of claims 1—5, characterised in that the lower and upper dioptric elements (Ei, Es) each have a focal line, said focal lines being distinct from each other.

7. Refractor according to claim 6, characterised in that the focal line of the lower dioptric elements (Ei) is at 400 mm and that one of said upper dioptric elements is at 800 mm, the focal line being defined as the line of intersection of the refracted rays with said plane (X) when rays of radiation strike the exposed refractor surface at right angles.

8. Refractor according to any one of claims 1—7, characterised in that at least two refractors according to any one of claims 1—7 are positioned adjacent to each other.

9. Refractor according to any one of claims 1—7, characterised in that the plane of maximum concentration of solar energy radiation is a plane spaced by 325,72 mm from the refractor (R).

## Revendications

1. Réfracteur optique oblong et fixe (R) comprenant des éléments dioptriques inférieurs (Ei) d'un côté d'un plan (X) et des éléments dioptriques supérieurs (Es) de l'autre côté du plan (X), les éléments dioptriques inférieurs et supérieurs (Ei, Es) étant réalisés en une matière transparente et présentant une forme telle que des rayons lumineux traversant les éléments dioptriques inférieurs et supérieurs (Ei, Es) soient réfractés en direction du plan (X), caractérisé en ce que les éléments dioptriques inférieurs (Ei) présentent un pouvoir réfringent plus élevé que celui des éléments dioptriques supérieurs (Es).

2. Réfracteur selon la revendication 1, caractérisé en ce que le plan (X) coupe le réfracteur (R) suivant une linge située à une certain distance de la ligne médiane divisant le réfracteur (R) en deux moitiés de largeur égale (L/2).

3. Réfracteur selon la revendication 1 ou 2, caractérisé en ce qu'un élément central (Ec) est prévu entre les éléments dioptriques inférieurs et supérieurs (Ei, Es) et est constitué de deux demi-lentilles planes-convexes de formes différentes et de distances focales différentes, ledit plan (X) séparant les deux demi-lentilles l'une de l'autre.

4. Réfracteur selon l'une quelconque des revendications précédentes, caractérisé en ce que le réfracteur (R) est utilisé pour concentrer l'énergie de rayonnement solaire et est disposé de telle manière que ses éléments dioptriques inférieurs (Ei) soient plus proches d'un plan horizontal (T) que ses éléments dioptriques supérieurs (Es).

5. Réfracteur selon l'une quelconque des revendications précédentes, caractérisé en ce que les éléments dioptriques inférieurs et supérieurs (Ei, Es) présentent la même épaisseur (ei).

6. Réfracteur selon l'une quelconque des revendications précédentes, caractérisé en ce que les éléments dioptriques inférieurs et supérieurs (Ei, Es) présentent chacun une ligne focale, ces lignes focales étant distinctes les unes des autres.

7. Réfracteur selon la revendication 6, caractérisé en ce que la ligne focale des éléments dioptriques inférieurs (Ei) se trouve à 400 mm et celle des éléments dioptriques supérieurs à 800 mm, la ligne focale étant définie comme étant l'intersection des rayons réfractés et du plan (X) lorsque des rayons solaires frappent la surface exposée du réfracteur à angle droit.

8. Réfracteur selon l'une quelconque des revendications précédentes, caractérisé en ce qu'au moins deux réfracteurs selon l'une quelconque des revendications précédentes sont contigus l'un à l'autre.

9. Réfracteur selon l'une quelconque des revendications 1 à 7, caractérisé en ce que le plan de concentration maximale d'énergie de rayonnement solaire est un plan situé à une distance de 325,72 mm du réfracteur (R).

## Patentansprüche

1. Ortsfester, optischer Längsrefraktor (R) mit unteren dioptrischen Elementen (Ei) auf einer Seite einer Ebene (X) und oberen, dioptrischen Elementen (Es) auf der anderen Seite dieser Ebene (X), wobei die unteren und oberen dioptrischen Elemente (Ei, Es) aus einem transparentem Material und mit einer solchen Form hergestellt sind, daß durch die unteren und oberen, dioptrischen Elemente (Ei, Es) hindurchgehende Lichtstrahlen zu dieser Ebene (X) gebrochen werden, dadurch gekennzeichnet, daß die unteren, dioptrischen Elemente (Ei) eine größere Brechkraft als die oberen, dioptrischen Elemente (Es) aufweisen.

2. Refraktor nach Anspruch 1, dadurch gekennzeichnet, daß diese Ebene (X) den Refraktor (R) in einer Linie schneidet, die von der Mittellinie beabstandet ist, welche den Refraktor (R) in zwei Hälften gleicher Breite L/2 teilt.

3. Refraktor nach Anspruch 1 oder 2, dadurch gekennzeichnet, daß ein mittleres Element (Ec) zwischen den unteren und oberen, dioptrischen Elementen (Ei, Es) vorgesehen ist und aus zwei flach-konvexen Halblinsen unterschiedlicher Formen und unterschiedlicher Brennweiten besteht, wobei die Ebene (X) die zwei Halblinsen voneinander trennt.

4. Refraktor nach einem der Ansprüche 1 bis 3, dadurch gekennzeichnet, daß der Refraktor (R) zur Konzentration von Sonnenstrahlungsenergie verwendet und so positioniert wird, daß seine unteren, dioptrischen Element (Ei) einer horizontalen Ebene (T) näher als seine oberen, dioptrischen Elemente (Es) sind.

5. Refraktor nach einem der Ansprüche 1 bis 4, dadurch gekennzeichnet, daß die unteren und oberen, dioptrischen Elemente (Ei, Es) die gleiche Dicke (ei) aufweisen.

6. Refraktor nach einem der Ansprüche 1 bis 5, dadurch gekennzeichnet, daß die unteren und oberen, dioptrischen Elemente (Ei, Es) jeweils eine Brennlinie aufweisen, die voneinander unterschieden sind.

7. Refraktor nach Anspruch 6, dadurch gekennzeichnet, daß die Brennlinie der unteren, dioptrischen Elemente (Ei) bei 400 mm und diejenige der oberen, dioptrischen Elemente bei 800 mm liegt, wobei die Brennlinie als die Schnittlinie der gebrochenen Strahlen mit der Ebene (X) definiert ist, wenn die Strahlen der Strahlung die ausgesetzte Refraktoroberfläche unter rechten Winkeln beaufschlagen.

8. Refraktor nach einem der Ansprüche 1 bis 7, dadurch gekennzeichnet, daß wenigstens zwei Refraktoren nach einem der Ansprüche 1 bis 7 einander benachbart positioniert sind.

9. Refraktor nach einem der Ansprüche 1 bis 7, dadurch gekennzeichnet, daß die Ebene der maxi-malen Konzentration der Sonnenstrahlungs-energie eine Ebene ist, die von dem Refraktor (R) 325,72 mm beabstandet ist.

0 066 112

*Fig. 1*

*Fig. 2*

1

*Fig. 3*

*Fig. 4*

0 066 112

_Fig.5_

_Fig.6_

3

Fig. 7

4